# EUROPEAN PATENT SPECIFICATION

(11) **EP 1 879 667 B1**
(45) Date of publication and mention of the grant of the patent: **28.07.2010**
(21) Application number: 06721505.3
(22) Date of filing: 12.05.2006
(51) Int. Cl.: A62B 35/00, A44B 11/00, B60R 22/00, B60R 22/10

(54) **SAFETY DEVICE FOR A SEAT BELT BUCKLE**
SICHERUNGSVORRICHTUNG FÜR EINE SICHERHEITSGURTSCHNALLE
DISPOSITIF DE SECURITE POUR BOUCLE DE CEINTURE DE SIEGE

(30) Priority: 12.05.2005 AU 2005902393
(43) Date of publication of application: 23.01.2008
(73) Proprietor: Mirmikidis, Imogen Carol, Mount Lawley, WA 6050 (AU)
(72) Inventor: Mirmikidis, Imogen Carol, Mount Lawley, WA 6050 (AU)
(74) Representative: Tetaz, Franck Claude Edouard
(86) International application number: PCT/AU2006/000631
(87) International publication number: WO 2006/119579

(56) References cited:
- DE-A1- 10 304 712
- DE-U1- 20 002 899
- DE-U1- 20 002 899
- GB-A- 2 348 460
- GB-A- 2 371 830
- GB-A- 2 371 830
- US-A- 4 939 824

## Description

### Field of the Invention

The present invention relates to a safety device for a seat belt buckle, in particular to a safety device arranged to prevent a release button of the seat belt buckle from being depressed.

### Background of the Invention

Many countries have road safety regulations which direct that infants and young children must be strapped into a child safety seat securely mounted in a vehicle, typically on the rear seat of the vehicle, while travelling.

Installation of the child safety seat and secure mounting thereof on the rear seat of the vehicle involves engagement of the child safety seat with a seat belt already installed in the vehicle.

If a release button of the seat belt buckle associated with the seat belt securing the child safety seat is depressed, the secure mounting of the child safety seat is compromised. Unfortunately, a young child is capable of depressing the release button. Furthermore, unintentional contact with the release button may also depress the button and compromise the safety of the child safety seat.

The present invention seeks to overcome at least some of the aforementioned disadvantages.

United Kingdom Patent Application No GB 2371830 A, which is considered to represent the closest prior art, describes a cover for a car seat buckle according to the preamble of claim 1 in that it comprises a sleeve of flexible material which may be slid over a first part of a buckle. When in place the sleeve denies access to a release mechanism of the buckle, thus preventing accidental release of the buckle. The sleeve is provided with two strap parts which fold around the second buckle part and are fastened to one another by hook and loop fastening tape.

German Gebrauchmuster No DE 200 02 899 U1 also describes a cover for a seat belt buckle comprising a box-like sleeve which may be fitted around the buckle.

### Summary of the Invention

In one aspect of the invention, there is featured a safety device for a seat belt buckle arranged, in use, to prevent a release button of the seat belt buckle from being depressed and thereby disengaging therefrom an insert coupled to a seat belt strap, the safety device comprising a casing for the seat belt buckle, wherein the casing is formed from a folded sheet having an elogate section with opposing side portions configured to fold around the seat belt buckle, a flap member depending from a side of the elongate section, wherein disposed in the flap member is an aperture comprising a slit or slot to receive the insert.

In cases of emergency, particularly immediately after a vehicle accident, it may be imperative to depress the release button and disengage the insert of the seat belt strap from the seat belt buckle. Accordingly, the casing of the safety device is further configured to be intentionally deformable to afford ready access to the release button.

In one embodiment of the invention, the casing comprises a sleeve having an open lower end and an open upper end, and a flap member depending from the open upper end of the sleeve, the flap member being configured, in use, to be folded over the open upper end of the sleeve.

In one embodiment, the sleeve is substantially cylindrical and is configured, in use, to be fitted over the seat belt buckle.

In an alternative embodiment, the sleeve is formed from an elongate section configured, in use, to be wrapped around the seat belt buckle. Opposing side portions of the elongate section are typically provided with respective fasteners. The elongate section is wrapped around the seat belt buckle in a manner whereby opposing side portions of the elongate section are spaced sufficiently closely to one another to be conjoined with respective fasteners. The type of fastener is selected to enable the opposing side portions of the elongate section to be readily detached from one another, such as for example in the case of an emergency where access to the release button of the seat belt buckle is required immediately in order to disengage the seat belt. Suitable examples of such fasteners include, but are not limited to, a zipper, hook and loop fastening material, buttons and corresponding button holes, snap fasteners, or hooks and eyes.

Typically, the slit or the slot is transversely disposed in the flap member to receive the insert.

In some embodiments, the flap member, or each tab member, is provided with a fastener to secure the flap member, or each tab member, over the open upper end of the sleeve. The fastener is of a type that can be quickly unfastened such that the flap member, or each tab member, can be detached and folded away from the open upper end of the sleeve thereby providing ready access to the release button of the seat belt buckle when required. Suitable examples of such fasteners include, but are not limited to, hook and loop fastening material, snap fasteners, hooks and eyes.

In one embodiment, the flap member is provided with a reinforcing member disposed contiguously on an upper and/or a lower surface of the flap member, and disposed, in use, proximal to the release button. The purpose of the reinforcing member is to afford additional stiffness to the flap member without overly compromising its foldability, while at the same time providing an additional barrier to access of the release button.

In a further embodiment, the flap member is provided with opposing side wing portions which are arranged to be folded towards one another and around the seat belt buckle when the flap member is folded over the open upper end of the sleeve. The opposing side wing portions can be provided with a fastener such as, for example, a hook and loop material to engage a corresponding fastener disposed on an outer surface of the sleeve of the casing.

In an alternative embodiment, the casing comprises a pliable sheet configured to be folded around the seat belt buckle, wherein a gap between respective edges thereof forms the aperture to receive the insert.

In a further alternative embodiment, the casing comprises a pliable sheet configured to be folded around the seat belt buckle, wherein the pliable sheet has a slit or slot therein configured to receive the insert.

Typically, the pliable sheet is provided with a pair of opposing side wings which are arranged to be folded towards one another thereby substantially forming a sleeve around the seat belt buckle, and a flap member which is arranged to be folded over an open upper end of the sleeve so formed, thereby substantially encasing the seat belt buckle.

Preferably, the pliable sheet is formed from a pliable material which can be easily bent into a desired shape and retain said desired shape. Suitable examples of pliable materials include, but are not limited to, a moldable plastics material, a moldable synthetic rubber, a moldable composite material, a malleable metallic or malleable alloy material, such as, for example, a wire mesh material.

In the description and claims of the invention, except where the context requires otherwise due to express language or necessary implication, the words "comprises" or variations such as "comprises" or "comprising" are used in an inclusive sense, i.e. to specify the presence of the stated features, but not to preclude the presence or addition of further features in various embodiments of the invention.

### Brief Description of the Drawings

Preferred embodiments, incorporating all aspects of the invention, will now be described by way of example only with reference to the accompanying drawings, in which:
Figure 1 shows an embodiment of a net of a safety device for a seat belt buckle in accordance with the present invention;
Figure 2 shows the net of Figure 1 in the course of being folded to form the safety device for the seat belt buckle;
Figure 3 shows an embodiment of the safety device for the seat belt buckle formed by folding the net shown in Figures 1 and 2;
Figure 4 shows a second embodiment of the safety device for the seat belt buckle;
Figure 5 shows a third embodiment of the safety device for the seat belt buckle; and,
Figure 6 shows a fourth embodiment of the safety device for a seat belt buckle.

### Detailed Description of the Preferred Embodiments of the Invention

Before the preferred embodiment of the present apparatus is described, it is understood that this invention is not limited to the particular materials described, as these may vary. It is also to be understood that the terminology used herein is for the purpose of describing the particular embodiment only, and is not intended to limit the scope of the present invention in any way. It must be noted that as used herein, the singular forms "a", "an", and "the" include plural reference unless the context clearly dictates otherwise. Unless defined otherwise, all technical and scientific terms used herein have the same meanings as commonly understood by one of ordinary skill in the art to which this invention belongs.

Referring to the accompanying figures, where like numerals refer to like parts, there is provided a safety device 10 for a seat belt buckle 120 arranged, in use, to prevent a release button 122 of the seat belt buckle 120 from being depressed and thereby disengaging therefrom an insert 112 coupled to a seat belt strap 110.

The safety device 10 comprises a casing 12 disposed around the seat belt buckle 120, wherein the casing 12 is provided with an aperture 30 to receive the insert 112. The casing 20 includes a sleeve 22 having an open lower end 21 and an open upper end 23 provided with a flap member 24.

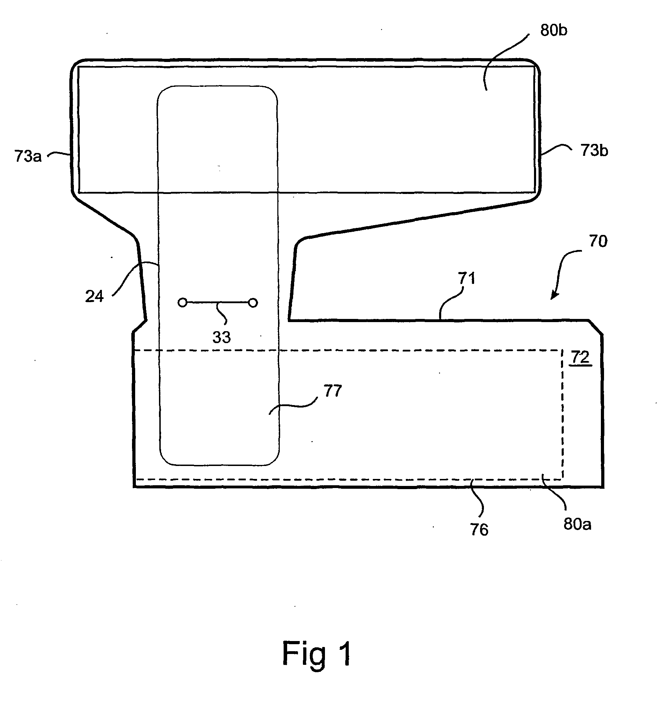

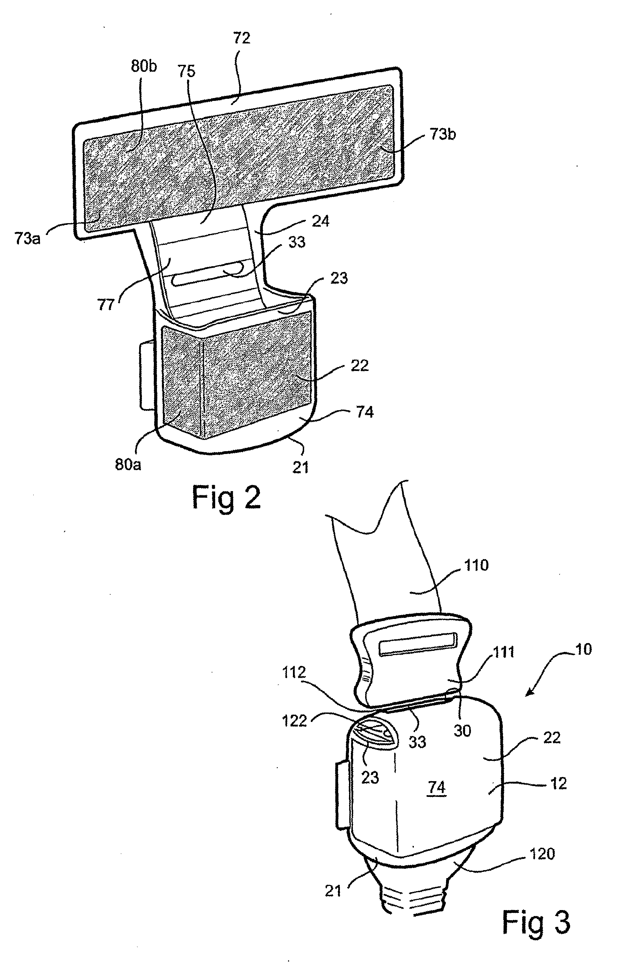

Figure 1 illustrates a net 70 corresponding to the safety device 10 shown in Figure 3. The net 70 is a flat sheet of a heavy duty fabric which can be easily folded into the safety device 10. Suitable examples of such heavy duty fabrics include, but are not limited to, neoprene, vinyl fabrics, upholstery fabrics, leather, and heavy duty denim. The net 70 has a first side 72 and a second side 74.

The net 70 includes an elongate section 76 and a flap member 24 depending from an upper side 71 of the elongate section 76. The flap member 24 of the net 70 is provided with opposing side wing portions 73a, 73b depending from a free end 75 thereof.

The elongate section 76 and the opposing side wing portions 73a, 73b are each provided with a fastener 80a, 80b, respectively, such as, for example, a portion of a hook and loop material. Typically, the fastener 80b extends between the opposing side wing portions 73a, 73b and is stitched or thermal welded to the second side 74 of the net 70, whereas the fastener 80b extends substantially along the length of the elongate section 76 and is stitched or thermal welded to the first side 72 of the net 70. The fasteners 80a, 80b are selected to engage one another as will be described below.

The flap member 24 is provided with a slit or slot 33. Typically, the slit or slot 33 is transversely disposed in the flap member 24.

The flap member 24 is further provided with a reinforcing member 77 disposed contiguously on the first side 72 of the net 70. Typically, the reinforcing member 77 is stitched or thermal welded to the first side 72 of the net 70. The reinforcing member 77 can be formed from a sheet of plastics material, such as polypropylene.

The elongate section 76 is configured, in use, to be folded around the seat belt buckle 120 in a manner whereby the second side 74 of the elongate section 76 is adjacent to the seat belt buckle and a sleeve 22 having an open lower end 21 and an open upper end 23 is formed, as shown in Figure 2. In this way, the fastener 80a is exposed on an outward facing surface of the sleeve 22.

The flap member is 24 configured, in use, to be folded over the open upper end 23 of the sleeve 22, and the opposing side wing portions 73a, 73b are also folded around the sleeve 22 thereby forming the casing 12 for the seat belt buckle 120. The fastener 80b on the first side 72 of the opposing side wing portions 73a, 73b is configured to engage the fastener 80a exposed on the outward facing surface of the sleeve 22. The sleeve 22 so formed can be fitted over the seat belt buckle 120 until the seat belt buckle 120 and the release button 122 is disposed within the sleeve 22. The insert 112 of the seat belt strap 110 is then inserted into slit 33 in the flap member 24 and thence into the seat belt buckle 120.

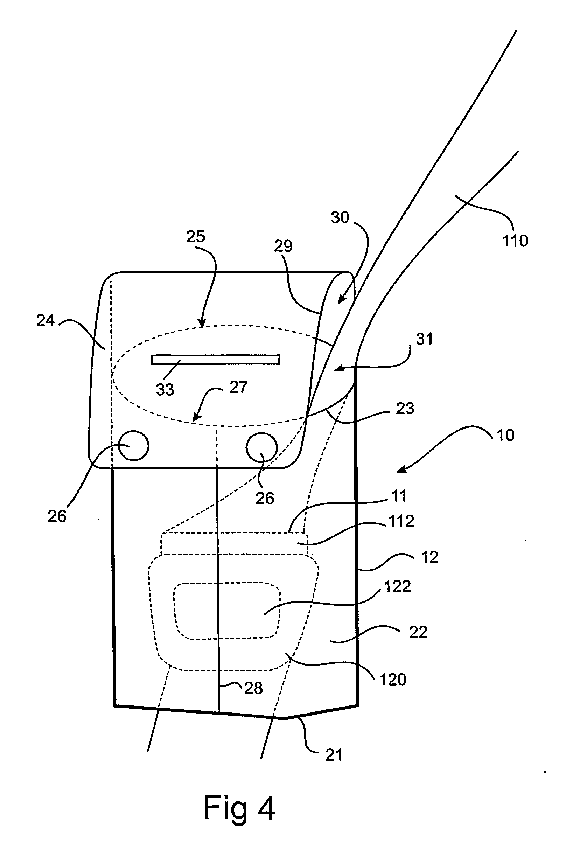

Referring to Figure 4, there is shown a second embodiment of the present invention. In this particular embodiment the casing 20 comprises a sleeve 22 having an open lower end 21 and an open upper end 23 provided with a flap member 24.

It is envisaged that the sleeve 22 and the flap member 24 will be formed from a heavy duty fabric which can be easily folded into a desired shape and substantially retain said desired shape. Suitable examples of such heavy duty fabrics include, but are not limited to, neoprene, vinyl fabrics, upholstery fabrics, leather, and heavy duty denim.

The sleeve 22 and its open lower end 21 are sufficiently wide to be fitted over the seat belt buckle 120 and the release button 122, as shown in Figure 4.

Typically, the sleeve 22 is cylindrical in shape. The sleeve 22 can be formed as an integral cylindrical sleeve with longitudinal seam 28 or as an elongate section whose opposing side edges or side portions are provided with corresponding fasteners extending substantially along the length of the side edges or side portions. Suitable examples of such fasteners include, but are not limited to, zippers, hook and loop fastening material, buttons, or press studs, to enable the opposing side edges or side portions to be conjoined, thereby forming the cylindrical sleeve with longitudinal seam 28. Preferably, the type of fastener is selected to enable the longitudinal seam 28 to be readily torn open if immediate access to the release button 122 is required, such as in an emergency. Alternatively, the longitudinal seam 28 can be stitched or thermal welded.

The flap member 24 depends from and substantially along a rear side 25 of the open upper end 23 of the sleeve 22. The flap member 24 is typically rectangular in shape and it is configured to be folded over a front side 27 of the open upper end 23 of the sleeve 20, thereby substantially encasing the seat belt buckle 120.

Preferably, the flap member 24 is provided with a fastener 26 to secure the flap member 24 over the front side 27 of the open upper end 23 of the sleeve 22. It will be understood that reciprocal fasteners are also disposed at appropriate locations proximate the open upper end 23 of the sleeve 22. The fasteners 26 are of a type that can be quickly unfastened such that the flap member 24 can be detached from the open upper end 23 of the sleeve 22 thereby providing ready access to the release button 122 of the seat belt buckle 120 when required. Suitable examples of fasteners 26 include, but are not limited to, hook and loop fastening material or press studs, or any suitable quick release fastener.

The flap member 24 is provided with a slit 33 disposed therein to receive the insert 112.

It is evident that when the flap member 24 is folded over the front side 27 of the open upper end 23 of the sleeve 20, a gap 31 is formed between a side edge 29 of the flap member 24 and the open upper end 23 of the sleeve 22. In an alternative embodiment, the gap 31 is arranged to receive the seat belt strap 110 and the insert 112 when the insert 112 is inserted into the seat belt buckle 120.

The flap member 24 is further provided with a reinforcing member (not shown) disposed contiguously on an underside of the flap member 24. Typically, the reinforcing member is stitched or thermal welded to the underside of the flap member 24. The reinforcing member can be formed from a sheet of plastics material, such as polypropylene. The purpose of the reinforcing member is to afford additional stiffness to the flap member 24 without overly compromising its foldability, while at the same time providing an additional barrier to access of the release button 122.

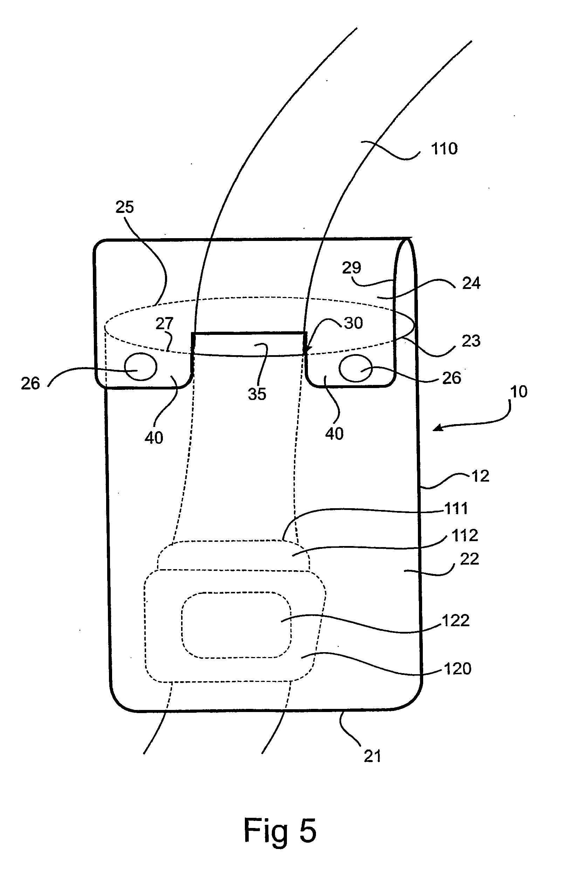

Referring to Figure 5, wherein like numerals denote like parts, the flap member 24 is further provided with a pair of spaced apart tab members 40. In this embodiment, the seat belt strap 110 and the insert 112 are arranged to be received in a gap 35 formed between the spaced apart tab members 40.

Preferably, each tab member 40 is provided with fastener 26 to secure the flap member 24 and the tab members 40 over the open upper end 23 of the sleeve 22.

Referring to Figures 4 or 5, in use, the sleeve 22 is fitted over the seat belt buckle 120 until the seat belt buckle 120 and the release button 122 is disposed within the sleeve 22. The flap member 24 is folded over the front side of the upper open end 23 of the sleeve 22 and secured thereto by engaging and closing the respective fastener 26. The insert 112 of the seat belt strap 110 is then inserted into slit 33 in the flap member 24 and thence into the seat belt buckle 120.

Alternatively, after the sleeve 22 is fitted over the seat belt buckle 120 the insert 112 of the seat belt strap 110 is then inserted into the seat belt buckle 120. The flap member 24 is then folded over the front side of the upper open end 23 of the sleeve 22 and secured thereto by engaging and closing the respective fastener 26. In this way, the seat belt strap 110 is located in the gap 31 between the upper open end 23 of the sleeve 22 and the side edge of the flap member 24, or the gap 33 between the two spaced apart tab members 40.

Access to the release button 122 of the seat belt buckle 120 is encumbered because the seat belt buckle 120 is substantially encased by the casing 20.

If ready access to the seat belt buckle 120 and the release button 122 is required, the fastener 26 may be quickly disengaged by tearing or forcing apart the respective fasteners 26 on the flap member 24 and proximate to the upper open end 23 of the sleeve 22, thereby deforming the casing 20. Alternatively, where the longitudinal seam 28 is joined by similar type of fastener, the longitudinal seam 28 can also be torn or forced apart to obtain ready access to the release button 122.

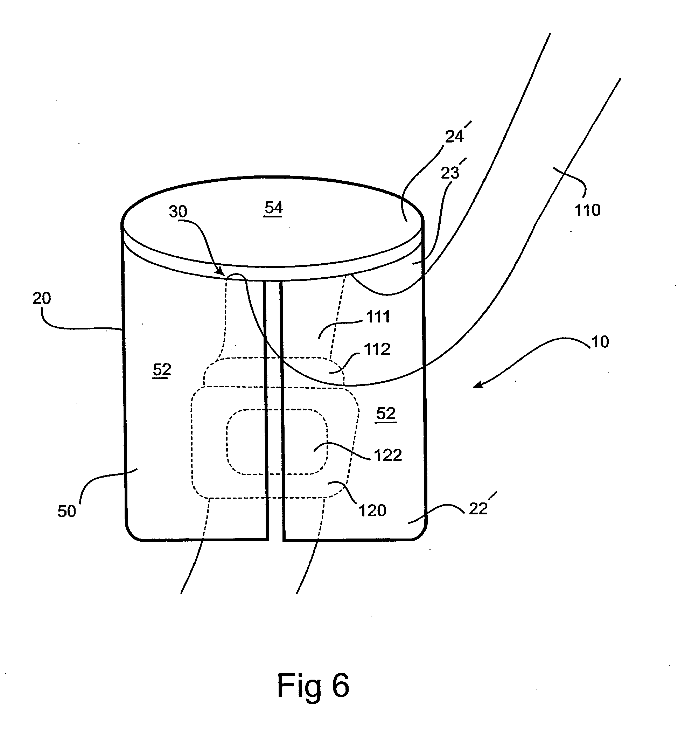

Referring to Figure 6, there is shown an alternative embodiment of the present invention. In this particular embodiment, the casing 20 comprises a pliable sheet 50 configured to be folded around the seat belt buckle 120, wherein a gap 30 between respective edges thereof forms an aperture to receive the seat belt strap 110 and the insert 112.

Alternatively, the pliable sheet 50 can have a slit or slot (not shown) therein configured to receive the seat belt strap and the insert 112.

The pliable sheet 50 is provided with a pair of opposing side wings 52 which are arranged to be folded towards one another thereby substantially forming a sleeve 22' around the seat belt buckle 120, and a flap member 54 which is arranged to be folded over an open upper end 23' of the sleeve 22' so formed, thereby substantially encasing the seat belt buckle 120 as shown in Figure 6.

Preferably, the pliable sheet 50 is formed from a pliable material which can be easily bent into a desired shape and retain said desired shape. Suitable examples of pliable materials include, but are not limited to, a moldable plastics material, a moldable synthetic rubber, a moldable composite material, a malleable metallic or malleable alloy material, such as, for example, a wire mesh material.

If ready access to the seat belt buckle 120 and the release button 122 is required, the opposing side wings 52 and/or the flap member 54 of the pliable sheet 50 may be quickly forced apart or folded back, thereby deforming the casing 20.

Numerous variations and modifications will suggest themselves to persons skilled in the relevant art, in addition to those already described, without departing from the basic inventive concepts. All such variations and modifications are to be considered within the scope of the present invention as defined by the appended claims.

## Claims

1. A safety device (10) for a seat belt buckle (120) arranged, in use, to prevent a release button (122) of the seat belt buckle (120) from being depressing and thereby disengaging therefrom an insert (112) coupled to a seat belt strap (110), the safety device (10) comprising a casing (12) for the seat belt buckle (120), **characterized in that** the casing (12) is formed from a folded sheet having an elongate section (76) with opposing side portions configured to fold around the seat belt buckle (120), a flap member (24) depending from a side of the elongate section (76), wherein disposed in the flap member (24) is an aperture (33) comprising a slit or slot to receive the insert.

2. The safety device according to claim 1, wherein the casing (12) is deformable between a folded configuration and an unfolded configuration.

3. The safety device according to claim 1 or claim 2, wherein the casing (12) comprises a sleeve (22) having an open lower end (21) and an open upper end (23) ahd the flap member (24) is configured, in use, to be folded over the open upper end (23) of the sleeve.

4. The safety device according to any one of claims 1 to 3, whereby the opposing side portions of the elongate section (76) are spaced sufficiently closely to one another to be conjoined with respective releasable fasteners.

5. The safety device according to claim 4, wherein the type of fastener is selected to enable the opposing side portions of the elongate section (76) to be readily detached from one another.

6. The safety device according to any one of claims 1 to 5, wherein the slit or the slot (33) is transversely disposed in the flap member (24).

7. The safety device according to any one of claims 1 to 6, wherein the flap member (24) is provided with a fastener (26) to secure the folded flap member over the folded elongate section.

8. The safety device according to any one of claims 1 to 7, wherein the flap member (24) is provided with a reinforcing member disposed, in use, proximal to the release button (122).

9. The safety device according to any one claims 1 to 8, wherein the flap member (24) is provided with opposing side wing portions (73a, 73b) configured, in use, to be folded towards one another and around the seat belt buckle (120) when the flap member (24) is folded over the folded elongate section (76).

10. The safety device according to claim 9, wherein the opposing side wing portions (73a,73b) are provided with fastener (80b) to engage a corresponding fastener (80a) disposed on an outer surface of the sleeve (22) of the casing (12).

11. The safety device according to any one of claims 1 to 10, wherein the elongate section (76) and the flap member (24) are formed from a pliable material which is foldable into a desired shape and able to retain said desired shape.

## Patentansprüche

1. Sicherheitsvorrichtung (10) für eine Sicherheitsgurtschnalle (120), die im Gebrauch angeordnet ist, um zu verhindern, dass ein Auslöseknopf (122) der Sicherheitsgurtschnalle (120) gedrückt wird und **dadurch** daraus ein mit einem Sicherheitsgurtband (110) gekoppelten Einschub (112) ausgeklinkt wird, wobei die Sicherheitsvorrichtung (10) ein Gehäuse (12) für die Sicherheitsgurtschnalle (120) umfasst, **dadurch gekennzeichnet, dass** das Gehäuse (12) aus einem Falzblech gebildet ist, das ein längliches Teilstück (76) mit gegenüberliegenden Seitenabschnitten, die konfiguriert sind, um die Sicherheitsgurtschnalle (120) umzuklappen, aufweist, wobei ein Klappenelement (24) von einer Seite des länglichen Teilstücks (76) abhängt, wobei in dem Klappenelement (24) eine Öffnung (33) angeordnet ist, die einen den Einschub aufzunehmenden Schlitz oder Spalt umfasst.

2. Sicherheitsvorrichtung nach Anspruch 1, wobei das Gehäuse (12) zwischen einer eingeklappten Konfiguration und einer ausgeklappten Konfiguration verformbar ist.

3. Sicherheitsvorrichtung nach Anspruch 1 oder 2, wobei das Gehäuse (12) eine Hülse (22) umfasst, die ein offenes unteres Ende (21) und ein offenes oberes Ende (23) aufweist, und das Klappenelement (24) konfiguriert ist, um im Gebrauch über das offene obere Ende (23) der Hülse geklappt zu werden.

4. Sicherheitsvorrichtung nach einem der Ansprüche 1 bis 3, wobei die gegenüberliegenden Seitenabschnitte des länglichen Teilstücks (76) eng genug voneinander beabstandet sind, um mit jeweiligen lösbaren Befestigungsvorrichtungen zusammengefügt zu werden.

5. Sicherheitsvorrichtung nach Anspruch 4, wobei die Art der Befestigungsvorrichtung ausgewählt wird, um es den gegenüberliegenden Seitenabschnitten des länglichen Teilstücks (76) zu ermöglichen, sich leicht voneinander zu lösen.

6. Sicherheitsvorrichtung nach einem der Ansprüche 1 bis 5, wobei der Schlitz oder Spalt (33) in dem Klappenelement (24) quer angeordnet ist.

7. Sicherheitsvorrichtung nach einem der Ansprüche 1 bis 6, wobei das Klappenelement (24) mit einer Befestigungsvorrichtung (26) versehen ist, um das geklappte Klappenelement über dem geklappten länglichen Teilstück zu sichern.

8. Sicherheitsvorrichtung nach einem der Ansprüche 1 bis 7, wobei das Klappenelement (24) mit einem Verstärkungselement versehen ist, das im Gebrauch proximal zum Auslöseknopf (122) angeordnet ist.

9. Sicherheitsvorrichtung nach einem der Ansprüche 1 bis 8, wobei das Klappenelement (24) mit gegenüberliegenden Flügelabschnitten (739, 736) versehen ist, die konfiguriert sind, um im Gebrauch zu einander und um die Sicherheitsgurtschnalle (120) herum geklappt zu sein, wenn das Klappenelement (24) über das geklappte längliche Teilstück (76) geklappt ist.

10. Sicherheitsvorrichtung nach Anspruch 9, wobei die gegenüberliegenden seitlichen Flügelabschnitte (739, 736) mit Befestigungsvorrichtungen (80b) versehen sind, um in eine entsprechende Befestigungsvorrichtung (80a) einzuklinken, die auf einer Außenseite der Hülse (22) des Gehäuses (12) angeordnet ist.

11. Sicherheitsvorrichtung nach einem der Ansprüche 1 bis 10, wobei das längliche Teilstück (76) und das Klappenelement (24) aus einem biegsamen Material gebildet sind, das in eine gewünschte Form klappbar ist und in der Lage ist, die gewünschte Form zu behalten.

## Revendications

1. Dispositif de sécurité (10) pour une boucle de ceinture de sécurité (120) agencé, durant l'utilisation, pour empêcher d'appuyer sur un bouton de libération (122) de la boucle de ceinture de sécurité (120) et ainsi d'en séparer une partie d'insertion (112) couplée avec une courroie de ceinture de sécurité (110), le dispositif de sécurité (10) comprenant un boîtier (12) pour la boucle de ceinture de sécurité (120), **caractérisé en ce que** le boîtier (12) est formé à partir d'une feuille pliée comportant une section allongée (76) avec des parties latérales opposées configurées pour se plier autour de la boucle de ceinture de sécurité (120), un élément de rabat (24) dépendant d'un côté de la section allongée (76), dans lequel est disposée une ouverture (33) dans l'élément de rabat (24), l'ouverture (33) comprenant une fente ou une encoche pour recevoir la partie d'insertion.

2. Dispositif de sécurité selon la revendication 1, dans lequel le boîtier (12) est déformable entre une configuration pliée et une configuration dépliée.

3. Dispositif de sécurité selon la revendication 1 ou la revendication 2, dans lequel le boîtier (12) comprend un manchon (22) comportant une extrémité inférieure ouverte (21) et une extrémité supérieure ouverte (23) et l'élément de rabat (24) est configuré, durant l'utilisation, pour être plié par-dessus l'extrémité supérieure ouverte (23) du manchon.

4. Dispositif de sécurité selon une quelconque des revendications 1 à 3, dans lequel les parties latérales opposées de la section allongée (76) sont espacées suffisamment près l'une de l'autre pour être jointes à des attaches libérables respectives.

5. Dispositif de sécurité selon la revendication 4, dans lequel le type d'attache est sélectionné pour permettre aux parties latérales opposées de la section allongée (76) d'être facilement détachées l'une de l'autre.

6. Dispositif de sécurité selon une quelconque des revendications 1 à 5, dans lequel la fente ou l'encoche (33) est disposée transversalement dans l'élément de rabat (24).

7. Dispositif de sécurité selon une quelconque des revendications 1 à 6, dans lequel l'élément de rabat (24) est pourvu d'une attache (26) pour fixer l'élément de rabat plié par-dessus la section allongée pliée.

8. Dispositif de sécurité selon une quelconque des revendications 1 à 7, dans lequel l'élément de rabat (24) est pourvu d'un élément de renforcement disposé, durant l'utilisation, de façon proximale au bouton de libération (122).

9. Dispositif de sécurité selon une quelconque des revendications 1 à 8, dans lequel l'élément de rabat est pourvu de parties d'aile latérales opposées (73a, 73b) configurées, durant l'utilisation, pour être pliées l'une vers l'autre et autour de la boucle de ceinture de sécurité (120) lorsque l'élément de rabat (24) est plié par-dessus la section allongée pliée (76).

10. Dispositif de sécurité selon la revendication 9, dans lequel les parties d'aile latérales opposées (73a, 73b) sont pourvues d'attaches (80b) pour entrer en prise avec une attache correspondante (80a) disposée sur une surface extérieure du manchon (22) du boîtier (12).

11. Dispositif de sécurité selon une quelconque des revendications 1 à 10, dans lequel la section allongée (76) et l'élément de rabat (24) sont formés à partir d'un matériau flexible qui peut être plié en une forme souhaitée et est capable de garder ladite forme souhaitée.
